# EUROPÄISCHE PATENTANMELDUNG

(11) **EP 1 422 642 A1**
(43) Veröffentlichungstag der Anmeldung: **26.05.2004**
(21) Anmeldenummer: 02406001.4
(22) Anmeldetag: 20.11.2002
(51) Int. Cl.: G06F 17/60

(54) **Verfahren zur nichtlinearen Dokumentenauswertung**

(71) Anmelder: ALSTOM Technology Ltd, 5400 Baden (CH)
(72) Erfinder: De Paris, Walter, 4310 Rheinfelden (CH); Möller, Uwe, Dr., 5116 Schinznach-Bad (CH); Wernli, Valborg, 5452 Oberrohrdorf (CH)

(57) **Zusammenfassung**

Ein Verfahren zur Dokumentenauswertung basiert darauf, Dokumente, die mit gemäss spezifischer Interessenprofile (a, ... , g) aus der Menge (1) der vorhandenen Dokumente zu herauszufiltern, und diese dokumentenspezifischen Lesern (A, ... , G) zuzuordnen und zeitgleich zur Verfügung zu stellen. Diese dokumentenspezifischen Leser haben die Aufgabe, die Dokumente auszuwerten und eine Relevanzbewertung vorzunehmen. Ein Computersystem (4) koordiniert den Bewertungsprozess mittels einer Koordinationstabelle (5). Aus den einzelnen individuellen Relevanzbewertungen wird eine dokumentenspezifische Gesamtrelevanz gebildet. In Abhängigkeit von dieser Bewertung und gegebenenfalls einer abschliessenden Bewertung kann die fachspezifische Entscheidungsstelle (PRO) zusammen mit einer administrativen Entscheidungsstelle (SPO/SPA) differenzierte Folgeprozesse einleiten. Weiterhin sind Kriterien geschaltet, um bei Dokumenten bestimmter kritischer Typen sofortige und in jedem Falle rechtzeitige Aktionen (200) zu ergreifen, sobald nur eine einzige Bewertung einen bestimmten Wert überschreitet, oder aber zu einem spätester Zeitpunkt (SZR) die Notwendigkeit einer Aktion nicht ausgeschlossen werden kann.

## Beschreibung

### Technisches Gebiet

Die vorliegende Erfindung betrifft ein Verfahren zur nichtlinearen Dokumentenauswertung gemäss dem Oberbegriff des Anspruchs 1. Sie betrifft weiterhin ein Computerprogramm oder Computerprogrammsystem, welches einen Computer zum Ablauf der Steuerung eines solchen Verfahrens veranlasst, sowie Datenträger, auf welchen dieses Computerprogramm oder Programmsystem gespeichert ist.

### Stand der Technik

Der Umfang der Bereitstellung von in Wirtschaft, Technik und Wissenschaft verwertbarer Information ist in den letzten Jahrzehnten immens gestiegen und steigt weiter steil an. Die vorhandene Information ist in einer Unzahl täglich veröffentlichter Dokumente enthalten, wobei unter Dokumenten nicht nur klassische Printmedien zu verstehen sind, sondern im weiteren Sinne auch Radio- und Fernsehmeldungen, und in exponentiell zunehmendem Masse natürlich auch auf dem Internet veröffentlichte Seiten, wobei diese Aufzählung selbstverständlich nicht abschliessend zu verstehen ist. Die Auswertung eines Dokumentes ist ein nichtlinearer Prozess, bei dem ein Fachmann den Informationsgehalt eines Dokumentes vor dem Hintergrund seines spezifischen Wissens und durchaus auch unter subjektiven Gesichtspunkten analysiert und gegebenenfalls aufbereitet. Die frühzeitige Auswertung, Aufbereitung und Nutzung dieser Informationsfülle und die daraus resultierende Fähigkeit, rechtzeitig infolge bekanntgewordener Sachverhalte gezielt Massnahmen zu ergreifen, bedeutet für Unternehmen und Organisationen einen beachtlichen Wettbewerbsvorteil in technischer wie wirtschaftlicher Hinsicht.

Ein Beispiel, bei dem sich dies besonders deutlich wird, ist die Beobachtung der Patentliteratur. Patentschriften müssen einerseits in inhaltlicher Hinsicht analysiert werden, und deren Relevanz für die eigene Entwicklungstätigkeit muss erfasst werden. Dies ist wichtig, um beispielsweise die eigene Entwicklungstätigkeit nicht in ein patentrechtlich abgedecktes Gebiet laufen zu lassen, andererseits können auch Doppelentwicklungen vermieden werden. Die gründliche inhaltliche Beurteilung erfordert die Dokumentenlese durch einen Leserkreis aus unterschiedlichen fachlichen Disziplinen, damit der Inhalt eines Patentdokumentes aus unterschiedlichen Blickwinkeln durchleuchtet wird. Die Gesamtrelevanz eines Dokumentes ergibt sich als Vereinigungsmenge der Beurteilung aller in den Beurteilungsprozess involvierten Leser. Der beschriebene Prozess ist aber auch zeitkritisch, da gegebenenfalls Fristen eingehalten werden müssen.

Eine klassische Methode zur Dokumentenlese beruht darauf, jedes durch ein Interessenprofil, welches beispielsweise auf der IPC-Einordnung beruht, erfasstes Dokument bei einem dokumentenspezifischen Leserkreis in gedruckter Form in den Umlauf zu geben, wobei die Zuordnung der Dokumente zu einem Leserkreis ebenfalls auf vordefinierten Kriterien beruht, und als Teilmenge des Interessenprofils verstanden werden kann. In einer bewährten Variante werden die Relevanzbewertungen der einzelnen dokumentenspezifischen Leser auf einer zum umlaufenden Dokument selbst gehörenden Liste erfasst, dergestalt, dass nach Beendigung des Umlaufs die Vereinigungsmenge aller Bewertungen zusammengefasst vorliegt. Aus der höchsten Relevanz ergibt sich eine dokumentenspezifische Relevanz. Als hochrelevant bewertete Dokumente werden in einem nächsten Schritt einer fachspezifischen Entscheidungsstelle zugeführt, welche ein weiteres Vorgehen einleitet. Andere, als weniger relevant eingestufte, Dokumente werden archiviert, während die als nicht relevant eingestuften Dokumente dem Recycling zugeführt werden.

Das beschriebene Verfahren ist, sofern die notwendige Organisation zur Verfügung steht, zunächst einmal einfach zu handhaben, und hat sich in der Praxis erst noch als effizient im Hinblick auf eine realistische Relevanzbewertung der Dokumente erwiesen.

Gleichwohl hat das beschriebene Verfahren auch Nachteile. Zum einen wird eine Vielzahl von Patentdokumenten als Volltext an die dokumentenspezifischen Leser verteilt. Die Erfahrung zeigt, dass mehr als die Hälfte dieser Dokumente bereits nach Analyse der Zusammenfassung und der relevanten Figur von allen Lesern als uninteressant eingestuft werden. Eine weitere Einschränkung der - linearisierten - Vorauswahl, die beispielsweise über IPC-Einordnungen oder Schlagwortkombinationen vorgenommen wird, birgt aber ein hohes Risiko, dass eine signifikante Anzahl hochrelevanter Dokumente nicht durch die nichtlineare Analyse durch die Leser erfasst wird.

Ein weiterer Nachteil ist darin zu sehen, dass die Lese der Dokumente bei den einzelnen Lesern seriell erfolgt, will sagen, es kann nur ein Leser zur Zeit an einem Dokument arbeiten. Gerade dann aber, wenn sich ein Dokument als potentiell relevant herauskristallisiert, was ja an sich einen höheren Aufwand zur Analyse eines Dokumentes erfordert und rechtfertigt, greifen strenge Fristen, so, dass dem einzelnen Leser nur eine sehr begrenzte Zeit zur Verfügung steht. Daneben ist auch der fristgerechte Rücklauf der Dokumente zu einer erforderlichen Koordinationsstelle nur schwer zu überwachen.

Es sind daher Anstrengungen unternommen worden, derartige Abläufe zu parallelisieren und deren Ablauf in Computersystemen abzubilden und zu überwachen. WO 00/65463 und WO 00/72114 geben jeweils Methoden an, mit denen beispielsweise ein Verleger zur Veröffentlichung an ihn adressierte an unterschiedliche in der Regel fachspezifische Bewerter schickt. Deren Bewertungen werden abgewartet, und wenn alle Bewertungen eingegangen sind, trifft der Verleger darauf basierend seine Entscheidung über den jeweiligen Beitrag. Dabei bleibt der Verleger Herr des Prozesses, und er kann zu jeder Zeit, ohne der Rücklauf aller Bewertungen abzuwarten, eine davon vollkommen unabhängige Entscheidung treffen. Auch US 5,706,452 gibt ebenfalls ein computerunterstütztes Verfahren zur Dokumentenbewertung durch eine Vielzahl von Lesern an. Der dort beschriebene Prozess ist ein mehrstufiger Prozess. Innerhalb einer Bewertungsstufe werden einzelne Bearbeiter über ein elektronisches Postsystem davon in Kenntnis gesetzt, wenn für sie ein neues Dokument zur Bearbeitung ansteht. Innerhalb einer Stufe können voneinander unabhängige Bearbeitungsschritte daher in zeitsparender Weise parallel abgearbeitet werden. Die einzelnen Bearbeiter tragen Ihre Ergebnisse in eine Datenbank ein, die regelmässig darauf überprüft wird, ob für ein bestimmtes Dokument alle angefragten Stellen ihre Ergebnisse eingetragen haben. Erst dann wird dieses Dokument für die nächste Bearbeitungsstufe freigegeben, welche auf den Ergebnissen der vorangehenden Bearbeitungsstufe basiert.
US 2001/0010329 beschreibt ebenfalls die computerunterstützte parallelisierte Abarbeitung eines Dokumentenbewertungsprozesses. In dem in der US 2001/0010329 beschriebenen Verfahren ist es möglich, bestimmte Zeitlimiten für die Bearbeitung respektive Bewertung eines Dokumentes zu setzen. Die in den Bewertungsprozess involvierten Personen werden über ein computerbasiertes elektronisch Postsystem informiert, wenn neue Dokumente für sie bereitstehen. Die Bewertungen werden ebenfalls über ein elektronisches Postsystem kommuniziert. Dabei wird die Verwendung standardisierter Formate für die Anfragenachrichten und die Bewertungen vorgeschlagen. Ein Folgeprozess wird eingeleitet, wenn alle angefragten Personen geantwortet und die notwendigen Angaben gemacht haben. Dabei wird aus einzelnen Bewertungen, welche individuell gewichtet werden, eine Gesamtbewertung gebildet und der einzuleitende Folgeprozess ist abhängig von dieser Gesamtbewertung. Wenn zu einem bestimmten Zeitpunkt einzelne Antwortrückläufe noch ausstehen, so wird beschrieben, Erinnerungen und neuerliche Aufforderungen an die säumigen Bearbeiter zu verschicken. gemäss der Lehre aus US 2001/0010329 kann ein Folgeprozess aber jedenfalls erst dann eingeleitet werden, wenn der Rücklauf vollzählig ist.

Wie der voranstehende Abriss zeigt, gehört die automatisierte Steuerung und Überwachung sogenannter "Workflows", bei denen Arbeitsprozesse parallel abgearbeitet werden und Folgeprozesse abhängig von den Ergebnissen vorangehender Prozesse eingeleitet werden, an sich zum Stand der Technik. Allen vorstehend beschriebenen Verfahren ist aber gemein, dass grundsätzlich die Fertigstellung aller parallel auszuführenden Bearbeitungsschritte abgewartet wird, bevor Folgeprozesse eingeleitet werden. Für eine Vielzahl von Aufgaben ist dieses Verfahren sehr gut geeignet, um für die Ausführung von Folgeprozessen ein Maximum an Informationen zur Verfügung zu haben. Jedoch besteht die latente Gefahr, dass sich ein Verfahren nach dem Stand der Technik ohne externe Eingriffe in einer Warteschleife wenigstens zeitweise "aufhängt", wenn einer der parallel ablaufenden Prozesse nicht ausgeführt wird, also beispielsweise ein Bearbeiter oder Bewerter seine Aufgabe nicht innerhalb einer gegebenen Frist abarbeitet. Dies wird dann kritisch, wenn der Folgeprozess zeitkritisch ist. Dies ist insbesondere dann der Fall, wenn die zu bewertenden Dokumente erteilte Patente sind. Ein Folgeprozess muss dann nämlich gegebenenfalls noch innerhalb der Einspruchsfrist stattfinden. Ebenso muss, wenn nur ein Leser ein solches Dokument als hochrelevant eingestuft hat und eine Aktion einleiten möchte, nicht zwangsweise die Bewertung der anderen Leser abgewartet werden, sondern der möglicherweise zeitkritische Folgeprozess kann unmittelbar eingeleitet werden.

### Darstellung der Erfindung

Aufgabe der vorliegenden Erfindung ist es, ein Verfahren der eingangs genannten Art anzugeben, welches die oben genannten Nachteile vermeidet. Es ist eine Aufgabe der vorliegenden Erfindung, in Verfahren, wie sie aus dem Stand der Technik, an sich bekannt sind, grob gesprochen Vorgehensweisen für Katastrophenszenarien zu implementieren.

Diese Aufgabe wird erfindungsgemäss durch die Gesamtheit der Merkmale des Anspruchs 1 gelöst.

Kern der Erfindung ist es also, beim Vorliegen bestimmter Voraussetzungen sofort und unmittelbar einen angemessenen Folgeprozess einzuleiten. Es werden also Aussprungbedingungen für eine Warteschleife definiert und es werden die einzuleitenden Folgeprozesse festgelegt. Dabei ist der Folgeprozess, der bei Erreichen eines spätesten Zeitpunktes für eine Reaktion eingeleitet wird, ein Auffangprozess, der in der Lage ist, auch den Fall einer höchsten Relevanz des zu bewertenden Dokumentes zu handhaben. Dieses Vorgehen erfolgt gemäss der Erfindung reflexartig, ohne dass dabei noch andere Kriterien überprüft oder Entscheidungen getroffen werden müssen. Dabei werden also Ereignisse festgelegt, welche im Ablauf des Verfahrens einen unmittelbaren Handlungsbedarf signalisieren, also sozusagen Gefahrenzustände signalisieren. Dies ist gemäss der Erfindung ganz besonders dann der Fall, wenn bis zu einem bestimmten Zeitpunkt, welcher einen letztmöglichen Zeitpunkt für eine allfällige Reaktion darstellt, wenigstens einer der in den Prozess involvierten Bearbeiter keine Stellungnahme oder Bewertung abgegeben hat. Jedes längere Warten hätte fatale Folgen, insofern, als im Bedarfsfalle keine angemessene Reaktion mehr erfolgen könnte. Wenn der Prozess beispielsweise, wie einleitend geschildert, eine Überwachung von Patenten und Offenlegungsschriften ist, und einer der Bewerter nur wenige Tage vor Ablauf der Frist für einen Einspruch gegen ein erteiltes Patent noch keine Stellungnahme abgegeben hat, so wird eine später abgegebene Forderung nach Gegenmassnahmen keinen Erfolg mehr haben. Um derartige fatale Situationen zu vermeiden, wird gemäss der Erfindung ein Auffangprozess unmittelbar eingeleitet, wenn bis zu diesem spätest möglichen Zeitpunkt für eine Reaktion wenigstens ein dokumentenspezifischer Leser keine Relevanzbewertung für das Dokument abgegeben hat. Das heisst, es müssen keine langwierigen Entscheidungen darüber getroffen werden, ob ein Folgeprozess eingeleitet wird, und wenn ja, welcher, sondern es wird unmittelbar ein Auffangprozess eingeleitet, welcher für den Fall zugeschnitten ist, dass dieser Leser eine Relevanzbewertung der höchsten Stufe abgegeben hätte, also beispielsweise einen Einspruch gewünscht hätte.
Zweckmässigerweise entspricht der Auffangprozess daher dem Folgeprozess der höchsten Relevanzstufe, also dem Folgeprozess, der eingeleitet worden wäre, wenn eine Relevanzbewertung der höchsten Relevanzstufe erfolgt wäre. Ebenso ist es auch sinnvoll, diesen Folgeprozess auch dann unmittelbar und ohne weitere Relevanzbewertungen abzuwarten, einzuleiten, sobald nur ein Leser eine höchstmögliche Relevanzbewertung abgegeben hat: Da in einer Ausführungsform der Erfindung, welche insbesondere bei der Bewertung von Patentdokumenten besonders gut geeignet ist, die höchste abgegebene Relevanzbewertung für die Gesamtbewertung ausschlaggebend ist, können nachfolgende abweichende Bewertungen die Gesamtbewertung nicht mehr ändern, so, dass der Folgeprozess unmittelbar eingeleitet werden kann. Durch diese Vorgehensweise kann wertvolle Reaktionszeit gewonnen werden, welche dazu beiträgt, den Folgeprozess effizienter abzuarbeiten. Es ist bei dem erfindungsgemässen Verfahren sehr von Vorteil, wenn die Relevanzbewertung und die Bestimmung der dokumentenspezifischen Relevanz in vordefinierten diskreten Stufen erfolgt. Dadurch wird die Bewertung einerseits übersichtlicher: Es ist nicht notwendig, eine verbale Umschreibung der Relevanzbewertungen zu analysieren, sondern es genügt, eine beispielsweise in einfachen Wort-, Zahlen-, oder Farbcodes dargestellte Information zu beachten. Zudem ist es, wenn eine begrenzte Anzahl von zum Beispiel 4 oder 5 Relevanzstufen definiert ist, sehr einfach, zugehörige relevanzbezogene Folgeprozesse zu definieren, und diese bedarfsgerecht automatisch einzuleiten.

Der erfindungsgemässe Ablauf ähnelt in der Tat einer messtechnischen Prozessüberwachung, bei der eine Anzahl von Sensoren, welche in einem Bussystem zusammengefasst sind, regelmässig abgefragt werden. Wenn ein einziger Sensor eine Überschreitung eines bestimmten Grenzwertes meldet, wird dies als kritischer Systemzustand gewertet, und als Folgeprozess zum Beispiel eine unmittelbare Anlagenabschaltung eingeleitet. Wenn ein Sensor eine Sensorstörung meldet oder keinen Messwert mehr liefert, so kann jedenfalls ein unkritischer Systemzustand nicht mehr garantiert werden, und es wird als Auffangprozess ebenfalls eine unmittelbare Anlagenabschaltung eingeleitet.

Zu unterscheiden ist zwischen zeitkritischen Dokumenten und nicht zeitkritischen Dokumenten. Nicht zeitkritische Dokumente erfordern unter keinen Umständen ein fristgebundenes handeln. Zeitgrenzen sind bei diesem Dokumententyp in erster Linie durch die Abwicklung interner Prozesse gegeben. Um die Bearbeitung eines solchen Dokumentes nicht über Gebühr hinzuziehen, und damit interne Abläufe unnötig zu belasten, ist es sinnvoll, Zeitlimite zu setzen, und dokumentenspezifische Leser bei Überschreitung dieser Zeitlimite Erinnerungen an zur Erledigung ausstehende Aufgaben erhalten; bei Implementation des Verfahrens mit Hilfe eines Computersystems können hierzu zweckmässig regelmässige Erinnerungen oder Aufforderungen über ein elektronisches Postsystem an die säumigen Leser verschickt werden. Ein Beispiel für einen solchen Dokumententyp sind Offenlegungen von Patentanmeldungen. Bei diesen ist unter keinen Umständen ein Handeln bis zu einem bestimmten Zeitpunkt zwingend notwendig. Es ist zwar wünschenswert, bis zu einem bestimmten Zeitpunkt Bewertungen aller Leser vorliegen zu haben, um bedarfsgerecht Folgeprozesse einzuleiten; ein Überschreiten dieses Zeitpunktes resultiert aber nicht in Rechtsverlusten. Eine verfahrensinterne Zeitlimite, ab der säumige Leser Erinnerungen erhalten, kann auch bei zeitkritischen Dokumenten gesetzt werden. Dort existiert aber ein Zeitpunkt, nach dem kein Handeln mehr möglich ist. Als Beispiel für diesen Dokumententyp seien erteilte Patente des EPA oder des DPMA genannt, bei welchen eine Einspruchsfrist abläuft. Für diesen Dokumententyp wird erfindungsgemäss ein spätester Zeitpunkt für eine Reaktion definiert. Dieser liegt zweckmässig eine gewisse Zeit vor dem massgeblichen Fristablauf, um den internen Folgeprozess - beispielsweise das Auswerten des Standes der Technik - abarbeiten zu können. die verfahrensinterne Zeitlimite wird zweckmässige eine hinreichende Zeit vor diesen spätestmöglichen Zeitpunkt für eine Reaktion gelegt.

Aus den vorstehenden Ausführungen kann eine weitere bevorzugte Ausgestaltung des erfindungsgemässen Verfahrens gefolgert werden. In einer bevorzugten Ausführungsform wird zwischen Unterschiedlichen Dokumententypen unterschieden, und die zur Bewertung zur Verfügung stehenden Relevanzstufen und/oder die zugeordnet definierten Folgeprozesse sind vom Dokumententyp abhängig.

Bei der Ausführung der Erfindung werden die Dokumente allen dokumentenspezifischen Lesern zeitgleich zur Verfügung gestellt. In einer bevorzugten Ausführungsform erhalten zeitgleich allen dokumentenspezifischen Leser das Dokument zunächst in einer niedrigen Detailstufe, beispielsweise in Form einer Zusammenfassung, welche gegebenenfalls noch durch ein oder mehrere Zeichnungen ergänzt ist. Wenn ein Leser anhand der Information der niedrigsten Detailstufe ein Dokument als potentiell relevant oder jedenfalls als nicht irrelevant einstuft, wird auf Anforderung eine höhere Detailstufe des Dokumentes, bis hin zum Gesamtdokument, zur Verfügung gestellt. Die parallele, zeitgleiche Dokumentenlese wird mit Hilfe einer Koordinationstabelle nachvollzogen. In der Koordinationstabelle wird idealerweise vermerkt, welches Dokument welchem Leser wann zur Verfügung gestellt wurde. Weiterhin erfolgen entsprechende Einträge, wenn ein Leser ein Dokument gelesen und bewertet hat, dergestalt, dass ein Dokument als ausgewertet vermerkt wird, wenn es von allen dokumentenspezifischen Lesern gelesen und bewertet wurde. Bedarfsweise kann eine interne Zeitlimite gesetzt und anhand der entsprechenden Einträge in der Koordinationstabelle überprüft werden, bis wann ein Dokument von allen dokumentenspezifischen Lesern gelesen und beurteilt sein sollte; einem Leser kann dann in einer festzusetzenden Zeitspanne vor erreichen der Zeitlimite eine Erinnerung geschickt werden. Ebenso kann in der Koordinationstabelle festgehalten werden, ob eine Kopie eines angeforderten Volltextdokumentes bereits vorliegt, oder ob diese zunächst noch extern beschafft werden muss. In der Koordinationstabelle wird mit Vorteil auch der spätestmögliche Zeitpunkt für eine Reaktion festgehalten.

Insgesamt kommt der Koordinationstabelle bei der Umsetzung eines erfindungsgemässen Verfahrens eine zentrale Rolle zu. Die technische Lösung der gestellten Aufgabe kann insbesondere darin gesehen werden, dass eine Koordinationstabelle, vorzugsweise auf einem von allen Lesern zugänglichen Computersystem, geführt wird, was es ermöglicht, eine parallele Dokumentenlese zu implementieren und zu überblicken. In der Koordinationstabelle kann eine durch die Leser vorzunehmende Relevanzbewertung der Dokumente erfasst werden, wobei die höchste Relevanz, die ein einzelner Leser einem Dokument zuordnet, die dokumentenspezifische Relevanz bildet. Vorteilhaft ist es hierbei, wenn die Relevanzbewertung in einem Raster vordefinierter Relevanzstufen vorgenommen wird. Die Erfindung wird programmtechnisch in einer Ausführungsform realisiert, indem die Relevanzbewertungen der einzelnen dokumentenspezifischer Leser wiederholt abgefragt werden, bis alle dokumentenspezifischen Leser ihren Eintrag in der Koordinationstabelle vorgenommen haben. Währenddessen überwacht ein Wächterprozess, ein sogenannter Watchdog, das auftreten von Ereignissen, welche eine sofortige Aktion erfordern, nämlich das Überschreiten des letztmöglichen Reaktionszeitpunktes ohne dass eine vollständige Relevanzbewerung vorliegt, oder auch eine Relevanzbewertung der höchsten Relevanzstufe. Der Watchdog aktiviert dann sofort und unmittelbar den dem jeweiligen Ereignis zugeordneten Folgeprozess.

Dokumente, die unterhalb einer bestimmten Relevanzstufe eingeordnet wurden, werden verworfen; die anderen Dokumente werden archiviert, und, bevorzugt mitsamt der Relevanzbewertung, einem breiten Leserkreis zugänglich gemacht.

Bevorzugt werden die Dokumente in elektronischer Form bereitgestellt und archiviert. Dabei kann ein Dokument in unterschiedlichen Detailstufen abgelegt sein, wobei die entsprechenden Dateien durch symbolische Zeiger, die in der Koordinationstabelle abgelegt sind, miteinander verknüpft sind und /oder Verweisungen aufeinander enthalten. Es ist in diesem Zusammenhang auch sehr vorteilhaft, die Koordinationstabelle in elektronischer Form zu führen. Wie oben beschrieben, kann die Koordinationstabelle eine Vielzahl für den Verfahrensablauf signifikanter Informationen enthalten, und sollte mit Vorteil nach diesen Informationen sortierbar sein. In diesem Sinne stellt eine elektronisch geführte Koordinationstabelle nicht nur eine zweidimensionale Tabelle dar, sondern ist im eigentlichen Sinne eine Datenbank, insbesondere eine relationale Datenbank. Auch muss in der Koordinationstabelle enthaltene Information nicht zwangsläufig direkt in der Koordinationstabelle gespeichert sein, sondern sie kann ohne Weiteres auch in Form von logischen Verweisungen und symbolischen Zeigern auf andere Dateien enthalten sein.

Wenn, wie oben dargelegt, die Dokumente in elektronischer Form auf einem Computersystem zur Verfügung gestellt werden, ist es sinnvoll, dokumentenspezifische Informationen in einem einheitlichen Datenformular in dem Computersystem abzulegen und den Anwendern anzuzeigen. In einem solchen Datenformular können auch unmittelbar dokumentenspezifische Einträge vorgenommen werden. Dabei kann in dem Computersystem die Identität des Eintragenden und dessen Berechtigung zur Vornahme von Einträgen überprüft werden. Diese zusätzlichen Einträge können dann in der Koordinationstabelle erfasst werden. In diesem Sinne stellt das Datenformular eine Ein- und Ausgabeschnittstelle der Koordinationstabelle dar.

Bei der elektronischen Ausführung des Verfahrens ist es weiterhin von Vorteil, wenn wenigstens eine Detailstufe eines jeden Dokumentes elektronisch recherchierbar vorliegt, dergestalt, dass die Dokumente einer Sachrecherche zugänglich sind.

Das Verfahren kann sehr vorteilhaft mit einem elektronischen Postsystem verbunden werden, indem einem Leser beispielsweise durch eine Meldung des elektronischen Postsystems mitgeteilt wird, wenn für ihn ein neues Dokument zur Lese bereitsteht. Ebenso kann das Mahnsystem bei der Annährung an Zeitlimite automatisiert über dieses Postsystem erfolgen, und die Leser können Ihre Bewertung auf diesem Wege an die Koordinationsstelle zurückmelden, wobei die Bewertung unmittelbar in der Koordinationstabelle erfasst wird. Die Ablage in einer elektronisch geführten Koordinationstabelle ermöglicht es, diese Schritte zu automatisieren.

Ein Vorteil des Verfahrens ist darin zu sehen, dass, sofern das Verfahren mit Hilfe eines Computersystems und mit Dokumenten in elektronischer Form durchgeführt wird, der gesamte Prozess leicht zu überwachen und durch geeignete Massnahmen zu steuern ist. Die Dokumentenauswertung erfolgt in einem Routineprozess; dabei unterliegen kritische Zeitpunkte wie der spätestmögliche Zeitpunkt für eine Reaktion einer automatischen Überprüfung, ohne dass dies unmittelbar in den Standardprozess eingreift. Beim Auftreten bestimmter Ereignisse wie dem Erreichen des spätestmöglichen Zeitpunktes für eine Reaktion, oder, wenn bei einem bestimmten Dokumententyp eine Bewertung der höchsten Relevanzstufe vorliegt, wir reflexartig ein entsprechender im Voraus festgelegter Folgeprozess eingeleitet. Eine wesentliche Anzahl von Prozessschritten kann automatisiert ablaufen, insbesondere auch deshalb, weil der Status in der Koordinationstabelle dokumentiert ist. Zusätzlich können die vorselektierten Dokumente mitsamt Bewertungen und Kommentaren einem grossen Leserkreis einfach zugänglich gemacht werden, was gerade innerhalb grosser Unternehmen einen nicht unerheblichen Mehrwert darstellt. In diesem Zusammenhang können weiterhin auch interne Dokumente einer Organisation, spezifischer, eines Unternehmens, den Lesern zugänglich gemacht werden. So kann beispielsweise durch eine interne Offenlegung prioritätsbegründend hinterlegter Patentanmeldungen ein breiter unternehmensinterner Leserkreis über neueste Entwicklungen informiert werden, bevor die eigentliche Offenlegung einer Anmeldung stattfindet. Dabei ist gegebenenfalls von der Möglichkeit Gebrauch zu machen, den autorisierten Leserkreis dokumentenspezifisch einzuschränken.

Ein weiterer Vorteil der Erfindung ist darin zu sehen, dass die Informationen, insbesondere die Relevanzbewertungen, bevorzugt in standardisierter und komprimierter Form in der Koordinationstabelle abgelegt werden. In dieser Hinsicht liefert die Koordinationstabelle allen an dem Prozess beteiligten Personen einen Extrakt der Beurteilungen von Dokumenten, welcher aufgrund seiner Kompaktheit und Untergliederung in eine begrenzte Anzahl diskreter Bewertungsstufen sehr übersichtlich ist und damit eine schnelle Entscheidungsfindung ermöglicht.

Wie bereits angeklungen ist, ist das erfindungsgemässe Verfahren besonders zur Auswertung in elektronischer Form vorliegender Dokumente geeignet, und mit Vorteil auf einem Computer oder einem Computersystem zu implementieren. Es wird daher auch Schutz begehrt für ein Computerprogramm oder ein Computerprogrammsystem zur Durchführung respektive Steuerung eines erfindungsgemässen Verfahrens. Es wird Schutz begehrt für Datenträger auf denen ein solches Computerprogramm oder Programmsystem als Quelltext wie auch als ausführbarer Code gespeichert ist. Dabei ist Datenträger im weitesten Sinne zu verstehen; insbesondere fällt auch ein Bündel aus mehreren Datenträgern darunter. Jedes computerlesbare und/oder beschreibbare Medium kommt hierzu in Frage. Ebenso wäre hierunter auch flüchtiger Speicher, wie RAM-Speicher, zu verstehen, welcher einen solchen Computercode als Quelltext oder in ausführbarer Form enthält.

Insbesondere ist hierunter auch der Arbeitsspeicher eines Computers zu verstehen, in welchem ein entsprechendes Computerprogramm geladen ist.

### Kurze Beschreibung der Zeichnung

Die Erfindung wird nachfolgend anhand von in der Zeichnung illustrierten Beispielen näher erläutert. Im Einzelnen zeigen
- Fig. 1 den Informationsfluss zwischen den an einem erfindungsgemässen Verfahren beteiligten Funktionseinheiten;
- Fig. 2 einen Ablaufplan eines erfindungsgemässen Verfahrens für ein nicht zeitkritisches Dokument;
- Fig. 3 einen Ablaufplan des Leseprozesses des erfindungsgemässen Verfahrens für ein zeitkritisches Dokument, mit den Aussprungbedingungen aus der Warteschleife;
- Fig. 4 eine schematische Darstellung der Koordinationstabelle.

Die Ausführungsbeispiele dürfen keineswegs in einem einschränkenden Sinne verstanden werden, sondern dienen dem besseren Verständnis der in den Ansprüchen gekennzeichneten Erfindung.

### Weg zur Ausführung der Erfindung

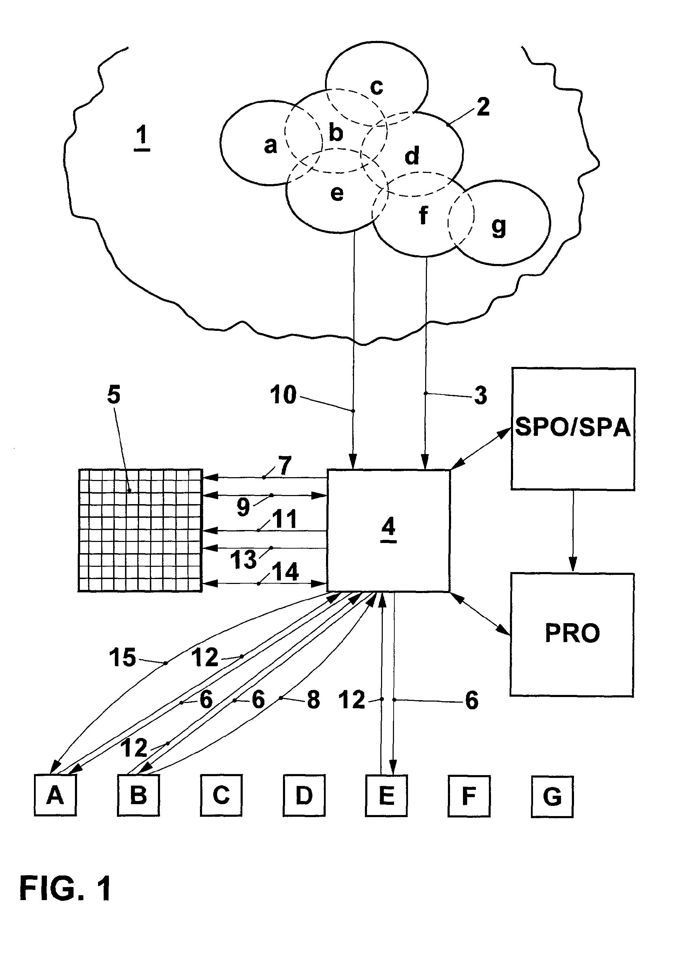

Ein stark schematisiertes Beispiel für den Datenfluss bei der Auswertung eines Dokumentes mittels eines erfindungsgemässen Verfahrens ist in Figur 1 dargestellt. Die Menge mit dem Bezugszeichen 1 repräsentiert beispielsweise die Menge aller in einem bestimmten Zeitraum, zum Beispiel innerhalb der letzten vier Wochen, veröffentlichten Patentschriften und Offenlegungsschriften. Leser A, B, C, D, E, F, G haben sich teilweise überschneidende Interessenprofile a, b, c, d, e, f, g definiert, deren Vereinigungsmenge das Interessenprofil 2 einer Organisation beschreibt. Auszuwerten sind alle Dokumente der Schnittmenge zwischen den Schriften 1 und dem gesamten Interessenprofil 2. In einem ersten Schritt werden die Zusammenfassungen 3 dieser Dokumente, wenn vorhanden mit relevanten Zeichnungen, auf ein Computersystem 4 geladen. Mit einem Dokument werden dabei Informationen geliefert, welchem Interessenprofil es zugeordnet ist. Das Computersystem legt für ein neu geliefertes Dokument einen Datensatz in der Koordinationstabelle 5 an, der unter anderem bibliografische Daten des Dokumentes enthält. Im dargestellten Fall entspricht ein Dokument den Interessenprofilen a, b und e. Das Computersystem 4 löst über ein elektronisches Postsystem den Versand von Benachrichtigungen 6 an die dokumentenspezifischen Leser A, B und E aus. Gleichzeitig erfolgt ein Eintrag 7 in der Koordinationstabelle, dass eine Beurteilung durch diese Leser zu erfolgen hat. Das Dokument steht diesen Lesern nun in einer niedrigen Detailstufe zur Verfügung. Leser B erkennt anhand dieser Information das Dokument als potentiell relevant. Zur besseren Einschätzung fordert er über eine Nachricht 8 das Volltextdokument an. Das Computersystem 4 prüft über einen Dialog 9 mit der Koordinationstabelle, ob dieses Volltextdokument bereits vorhanden ist. Ist dieses nicht vorhanden, so lädt das Computersystem 4 das Dokument 10, und es erfolgt ein entsprechender Eintrag 11 in der Koordinationstabelle, in der Form eines symbolischen Zeigers auf das abgespeicherte Volltextdokument; wenn ein anderer Leser ebenfalls dieses Volltextdokument wünscht, kann es ihm auf seine Anfrage unmittelbar zur Verfügung gestellt werden. Wenn ein dokumentenspezifischer Leser ein Dokument gelesen hat, gibt er eine Rückmeldung 12 an das Computersystem, und es wird ein entsprechender Eintrag 13 in der Koordinationstabelle vorgenommen. Die Rückmeldung und der Eintrag beinhalten eine Relevanzbewertung des Dokumentes durch die dokumentenspezifischen Leser. Zu den Einträgen in der Koordinationstabelle gehören, sofern es sich um terminkritische Dokumente handelt, Rücklauffristen, welche regelmässig durch das Computersystem durch einen Überprüfungsdialog 14 mit der Koordinationstabelle überprüft werden, so lange, bis alle Leser eine Rückmeldung gegeben haben, das heisst, bis in der Koordinationstabelle eine Relevanzbewertung für jeden dokumentenspezifischen Leser vorliegt. Wenn in einer angemessen zu bestimmenden Zeit vor der Zeitlimite kein vollständiger Rücklauf vorliegt, so werden den säumigen Lesern Mahnungen zugeschickt. Hat Leser A nicht fristgerecht eine Bewertung abgegeben, so erhält er eine Erinnerung 15, bis er ebenfalls eine Relevanzbewertung des Dokumentes abgibt. Nach vollständiger Relevanzbewertung wird das Dokument bei hoher Relevanz einer fachspezifischen Entscheidungsstelle PRO zugeleitet. Diese fachspezifische Entscheidungsstelle kann je nach Dokumententyp und Dokumentenrelevanz sehr differenzierte weitere Prozesse einleiten, bei denen ebenfalls die Koordinationstabelle eine zentrale Rolle zur Dokumentation des Prozesses und des Status des Prozesses innehat. Der fachspezifischen Entscheidungsstelle PRO ist eine administrative Entscheidungsstelle SPO/SPA nebengeordnet. Die administrative Entscheidungsstelle SPO/SPA ist befugt, wiederholt, vor der Einleitung von Folgeprozessen, insbesondere vor der Einleitung kostenwirksamer Prozesse, eine neue Relevanzeinstufung von der fachspezifischen Entscheidungsstelle PRO anzufordern, dies insbesondere in Beachtung der Tatsache, dass die Folgeprozesse langfristig angelegt sind, die technischen und wirtschaftlichen Randbedingungen aber, in deren Kontext eine Relevanzeinstufung erfolgt, hochdynamisch sind und stetigen Veränderungen unterliegen. Insbesondere hat in einer Ausführungsform der Erfindung die administrative Entscheidungsstelle SPO/SPA auch die Befugnis, die fachspezifische Entscheidungsstelle PRO festzulegen. Ein weiterer wichtiger Punkt des erfindungsgemässen Verfahrens ist die Ablage der Dokumente in einer Form, in der sowohl die Dokumente selbst wie auch Kommentare und Bewertungen einem breiten Leserkreis zugänglich sind; dabei werden die Dokumente bevorzugt recherchierbar abgelegt, dergestalt, dass die archivierten Dokumente auch einer Sachrecherche zugänglich sind.

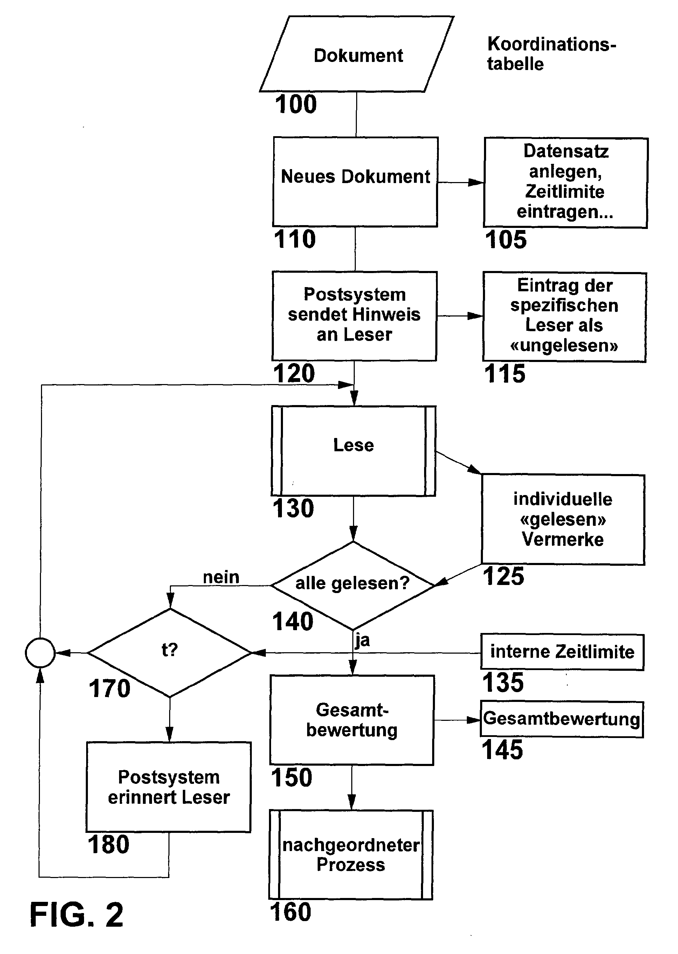

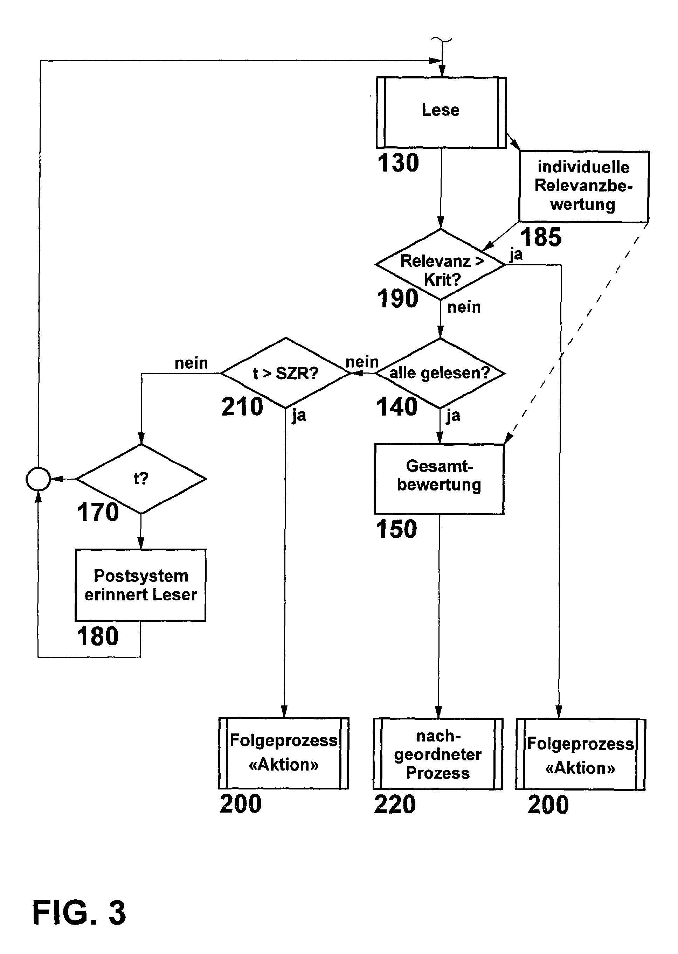

In Fig. 2 ist ein Flussdiagramm eines schematischen Ablaufs bei der Auswertung eines nicht zeitkritischen Dokumentes dargestellt. An sich ist der dargestellte Ablauf ein Teil des erfindungsgemässen generischen Ablaufs, wobei das hier illustrierte Verfahren dann durchgeführt wird, wenn das Dokument als nicht zeitkritisch gekennzeichnet ist. Durch diese Darstellung entfallen einige bedingte Verzweigungen des Programmablaufs, was die Darstellung des Verfahrensablaufs vereinfacht und übersichtlicher gestaltet; unten wird im Zusammenhang mit Figur 3 der im Falle eines zeitkritischen Dokumentes gewählte Verfahrensablauf erläutert. Anhand der vorliegenden Figur soll ein Überblick über einen erfindungsgemässen Verfahrensablauf im Gesamtkontext, insbesondere mit der für die Erfindung bedeutsamen Koordinationstabelle, gegeben werden. Die rechte Spalte gibt die Ereignisse der Koordinationstabelle wieder. Ein erster Funktionsblock 100 liest ein neues Dokument ein. Ein Funktionsblock 110 speichert diesen, und nimmt einen ersten Eintrag 105 in der Koordinationstabelle vor. Dabei wird ein dem neuen Dokument zugeordneter Datensatz angelegt, und es werden bibliografische Daten, ein Zeiger auf das Dokument, sowie weitere relevante Daten, wie eine Frist zum Abschluss der Dokumentenauswertung, eingetragen. In einem nächsten Funktionsblock 120 versendet ein elektronisches Postsystem automatisch Hinweise auf das neue Dokument an die dokumentenspezifischen Leser. Insbesondere an dieser Stelle kann das erfindungsgemässe Verfahren vorteilhaft in ein bestehendes elektronisches Postsystem, beispielsweise auf der Basis von Lotus Notes, eingebunden werden. Gleichzeitig erfolgt ein Eintrag 115 der spezifischen Leser als "ungelesen" in der Koordinationstabelle. Danach tritt der Prozess in eine "Lese"- Schleife ein. Dabei wird eine Schleife solange durchlaufen, bis ein Dokument von allen dokumentenspezifischen Lesern gelesen wurde. Von aussen betrachtet befindet sich das Verfahren in einem Wartezustand, der erst aufgelöst wird, wenn alle dokumentenspezifischen Leser das Dokument als "gelesen" gekennzeichnet haben. Der Leseprozess 130 ist ein in diesem Rahmen nicht weiter aufgeschlüsselter Unterprozess. Im Rahmen des Leseprozesses erfolgt ein Eintrag der individuellen "gelesen" Einträge 125 und der nicht dargestellten individuellen Relevanzbewertungen in der Koordinationstabelle. In regelmässigen Zeitabständen, beispielsweise täglich, werden die individuellen "gelesen"-Einträge 125 der Leser in der Koordinationstabelle abgefragt, und ein einem Funktionsblock 140 wird geprüft, ob alle dokumentenspezifischen Leser bereits eine Bewertung vorgenommen und in der Koordinationstabelle eingetragen haben. Wenn dies nicht der Fall ist, wird in einem nächsten Schritt 170 überprüft, ob eine dokumentenspezifische Rücklaufffrist, welche als interne Zeitlimite 135 in der Koordinationstabelle abgelegt ist, bereits erreicht oder überschritten ist. Falls dies der Fall ist, werden säumige Leser über das elektronische Postsystem erinnert, und der Leseprozess fortgeführt, bis die Abfrage 140 positiv beantwortet wird. Danach wird im Verfahrensschritt 150 die Gesamtbewertung vorgenommen und die resultierende dokumentenspezifische Relevanzbewertung 145 wird in der Koordinationstabelle abgelegt. Abschliessend wird, abhängig von der erfolgten Relevanzeinstufung, ein nachgeordneter Prozess 160 eingeleitet.

Es ist leicht nachvollziehbar, dass das gesamte Verfahren, wie im Zusammenhang mit Figur 2 beschrieben, vergleichsweise leicht in der "Lese"-Schleife im Wartezustand blockiert werden kann. Bei einem zeitkritischen Dokument, welches möglicherweise eine Aktion erfordert, beispielsweise das fristgerechte Einlegen eines Einspruchs gegen ein erteiltes Patent, ist ein solches Risiko natürlich nicht tragbar. Gemäss Figur 3 wird sind in diesem Falle zwei Aussprungkriterien in den Abfragen 190 und 210 definiert, welche ein rechtzeitiges Beenden des Wartezustandes durch Auflösen der "Lese"-Schleife garantieren. Aus Gründen der Übersichtlichkeit ist in der Figur 3 die Koordinationstabelle mur sehr rudimentär dargestellt. Auch die im Zusammenhang mit Figur 2 ebenfalls erläuterten Verfahrensschritte 100, 110, und 120 sind weggelassen worden; im Lichte der im Zusammenhang mit Figur 2 gemachten Ausführungen ist dieser Zusammenhang für den Fachmann einfach herstellbar. Der in Figur 3 dargestellte Teil des erfindungsgemässen Verfahrens beginnt mit dem eigentlichen Leseprozess 130. Wie bereits im Zusammenhang mit Figur 2 erläutert, hier aber nicht explizit dargestellt, erfolgt jeweils ein Eintrag eines individuellen "gelesen"-Vermerks in der Koordinationstabelle. Ebenfalls erfolgt ein Eintrag der individuellen Relevanzbewertung 185 eines Lesers in der Koordinationstabelle. Im Abfrage-Funktionsblock 190 wird geprüft, ob diese individuelle Relevanzbewertung einen bestimmten Wert, eine Art Reizschwelle, hier als "krit." bezeichnet, überschreitet. Insbesondere kann dieses Kriterium sein, ob die Relevanzbewertung der höchsten Relevanzstufe entspricht. Wenn dies der Fall ist, ist bereits ein Aussprungkriterium aus der "Lese"-Schleife erfüllt, und es wird unmittelbar der Folgeprozess "Aktion" 200, eingeleitet, beispielsweise der interne Prozess zum Einlegen eines Einspruchs. Weiteres Warten auf Dokumentenbewertungen anderer Leser erübrigt sich, da ohnehin Aktion gefordert wird, und die eingesparte Zeit kann zur Abarbeitung des - zeitkritischen - Folgeprozesses genutzt werden. Falls das in 190 abgefragte Kriterium nicht erfüllt ist, so wird in der Abfrage 140 überprüft, ob bereits alle dokumentenspezifischen Leser das Dokument gelesen und eine Relevanzbewertung durchgeführt haben. Falls dieses der Fall ist, wird wie oben im Zusammenhang mit Figur 2 beschrieben im Schritt 150 aus den individuellen Relevanzbewertungen eine Gesamtbewertung ermittelt, und davon abhängig wird ein nachgeordneter Prozess 220 eingeleitet. Falls noch nicht alle dokumentenspezifischen Leser das Dokument gelesen haben, wird im Schritt 210 abgefragt, ob der späteste Zeitpunkt für eine Reaktion SZR bereits erreicht ist. Dieser Zeitpunkt wird mit Vorteil beim hier nicht dargestellten Verfahrensschritt "Datensatz anlegen", im Funktionsblock 110, der in Figur 2 dargestellt ist, festgelegt. Mit Vorteil ist der hier festgelegte späteste Zeitpunkt für eine Reaktion SZR so gewählt, dass genügend Zeit für die Abarbeitung der internen Folgeprozesse verbleibt. Im Falle, dass es sich bei dem Dokument um ein erteiltes deutsches oder europäisches Patent handelt, wird der späteste Zeitpunkt für eine Reaktion SZR mit Vorteil wenigstens zwei oder noch besser vier Wochen vor dem Ablauf der Einspruchsfrist gesetzt, so, dass hinreichend Zeit für das Sammeln und Sichten von Einspruchsmaterial und das Abfassen der Einspruchsschrift bleibt. Falls der späteste Zeitpunkt für eine Reaktion erreicht ist, wird sofort und unmittelbar als Auffangprozess der Folgeprozess "Aktion" 200 eingeleitet, und die "Lese"-Schleife wird abgebrochen. Auf diese Weise ist für zeitkritische Prozesse auf alle Fälle ein Aussprungkriterium aud der "lese"-Schleife geschaffen, und es wird verhindert, dass sich das Verfahren in einem Wartezustand aufhängt. Wenn der späteste Zeitpunkt für eine Reaktion noch nicht erreicht ist, wird im Abfrageblock 170, wie ebenfalls im Zusammenhang mit Figur 2 bereits ausführlich erläutert, das erreichen einer internen Zeitlimite erreicht, und gegebenenfalls werden Erinnerungen und/oder Mahnungen an die säumigen Leser verschickt. Ler Leseprozess wird fortgeführt, bis entweder alle Leser eine Bewertung abgegeben haben, oder bis eines der beschriebenen Aussprungkriterien erfüllt ist.

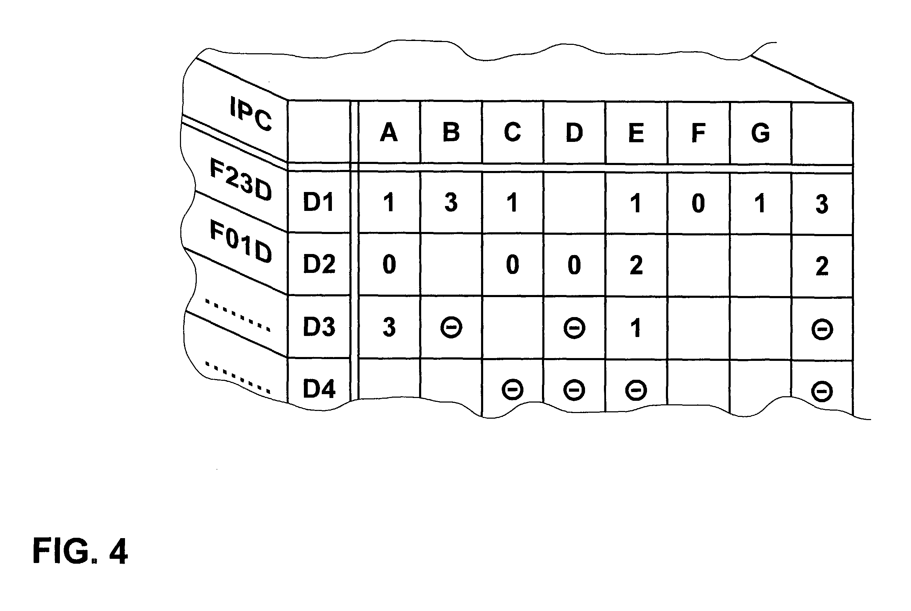

Die Koordinationstabelle ist, wie den obigen Ausführungen implizit zu entnehmen ist, keineswegs auf eine zweidimensionale Tabelle beschränkt. Ein schematisches Beispiel für eine Koordinationstabelle ist in Figur 4 dargestellt. In der Blattebene sind auf einer vertikalen Achse Dokumente D1, D2, D3, D4, ... eingetragen; die Spalten sind den Lesern zugeordnet, und in der letzten Spalte ist die Gesamtbewertung des Dokumentes vermerkt. Wenn ein Dokument nicht dem Interessenprofil eines Lesers zugeordnet ist, bleibt die entsprechende Zelle der Tabelle leer. Ein "-" bedeutet einen "nicht gelesen"respektive "noch zu lesen" - Vermerk. Dieser wird bei der Beurteilung durch die Leser durch deren Bewertungen ersetzt. Die beispielhaft wiedergegebene Tabelle ist so zu lesen, dass die dokumentenspezifischen Leser von Dokument D1 A, B, C, E, F und G sind; alle haben Ihre Bewertung abgegeben, und es resultiert die Gesamtbewertung 3. Die dokumentenspezifischen Leser von D3 sind A, B, D, und E; A und E haben ihre Bewertung abgegeben, die Bewertung durch B und D steht noch aus, daher konnte auch keine Gesamtbewertung vorgenommen werden. Auf einer in die Blattebene hineinreichenden Achse sind andere Angaben wie die IPC-Einordnung aufgeführt. Andere wichtige Angaben sind zum Beispiel der Patentinhaber, das Veröffentlichungsdatum, oder ein Zeiger auf die Zusammenfassung und den Volltext des Dokumentes. Die Koordinationstabelle ist mit Vorteil eine mehrdimensionale Datenbank, was es ermöglicht, die enthaltenen Daten ohne Weiteres in Abhängigkeit einer Vielzahl von Angaben aufzuschlüsseln und auszuwerten.

Die angegebenen Ausführungsbeispiele sind rein instruktiv und in keinem Falle einschränkend zu verstehen, und können die Möglichkeiten des in den Ansprüchen gekennzeichneten Verfahrens nur teilweise beleuchten; dem interessierten Fachmann eröffnen sich in diesem Lichte aber ohne weiteres eine Vielzahl möglicher Ausführungsformen der in den Ansprüchen gekennzeichneten Erfindung.

### Bezugszeichenliste

- 1: Menge der zur insgesamt Verfügung stehenden Information
- 2: Interessenprofil aller Leser A ... G
- 3: Dokumentenzusammenfassungen
- 4: Computersystem
- 5: Koordinationstabelle
- 6: Benachrichtigung
- 7: Eintrag
- 8: Nachricht, Anforderung
- 9: Dialog
- 10: Dokument
- 11: Eintrag
- 12: Rückmeldung, Quittierung
- 13: Eintrag, Quittierungseintrag, "gelesen"-Vermerk
- 14: Überprüfungsdialog
- 15: Erinnerung
- A, ..., G: Leser
- a, ... , g: individuelle Interessenprofile der Leser A, ... , G
- PRO: fachspezifische Entscheidungsstelle
- SPO/SPA: administrative Entscheidungsstelle
- SZR: spätester Zeitpunkt für eine Reaktion

## Patentansprüche

1. Verfahren zur nichtlinearen Dokumentenauswertung, mit den folgenden Schritten:
- Dokumente (a, ... , g) werden dokumentenspezifischen Lesern (A, ... ,G) zugeordnet;
- die Dokumente werden allen dokumentenspezifischen Lesern (A, ... , G) zeitgleich zur Verfügung gestellt;
- es erfolgt ein Vermerk (7) in einer Koordinationstabelle (5), welches Dokument welchem Leser zur Verfügung gestellt wurde;
- wenn ein Leser ein Dokument gelesen und ausgewertet hat, erfolgt ein entsprechender Vermerk (13) in der Koordinationstabelle;
- wenn alle dokumentenspezifischen Leser ein Dokument gelesen und ausgewertet haben, erfolgt ein entsprechender Vermerk in der Koordinationstabelle;
bei welchem Verfahren die dokumentenspezifischen Leser eine Relevanzbewertung vornehmen, die in der Koordinationstabelle erfasst wird, und wobei aus den erfolgten Relevanzbewertungen eine dokumentenspezifische Relevanz gebildet wird, von der ausgehend ein Folgeprozess eingeleitet wird, und wobei dokumentenspezifische Zeitlimite gesetzt werden, und ein dokumentenspezifischer Leser in einer definierten Zeitspanne vor Erreichen der Zeitlimite eine Erinnerung (15) erhält, **dadurch gekennzeichnet, dass** dokumentenspezifisch ein kritischer Zeitpunkt definiert wird, und, wenn bei erreichen dieses kritischen Zeitpunktes wenigstens eine Relevanzbewertung eines dokumentenspezifischer Leser nicht in der Koordinationstabelle eingetragen ist, unmittelbar ein Auffangprozess eingeleitet wird.

2. Verfahren nach Anspruch 1, **dadurch gekennzeichnet, dass** die dokumentenspezifische Relevanz als das Maximum der erfolgten Relevanzbewertungen bestimmt wird.

3. Verfahren nach einem der vorstehenden Ansprüche, **dadurch gekennzeichnet, dass** die Relevanzbewertung und die Bestimmung der dokumentenspezifischen Relevanz in diskreten Stufen erfolgt, wobei jeder Stufe ein Folgeprozess zugeordnet ist.

4. Verfahren nach einem der vorstehenden Ansprüche, **dadurch gekennzeichnet, dass** unmittelbar ein Folgeprozess eingeleitet wird, wenn wenigstens ein Leser eine Relevanzbewertung der höchsten Relevanzstufe abgegeben hat.

5. Verfahren nach einem der vorstehenden Ansprüche, **dadurch gekennzeichnet, dass** der Auffangprozess dem Folgeprozess der höchsten Relevanzstufe entspricht.

6. Verfahren nach einem der vorstehenden Ansprüche, wobei die Dokumente in einem ersten Schritt in einer niedrigen Detailstufe (3) zur Verfügung gestellt werden, und einem Leser auf Anforderung eine höhere Detailstufe (10) eines Dokumentes zur Verfügung gestellt wird.

7. Verfahren nach einem der vorstehenden Ansprüche, **dadurch gekennzeichnet, dass** die Dokumente entsprechend der dokumentenspezifischen Relevanz verworfen oder in relevanzbezogenen Archiven abgelegt werden.

8. Verfahren nach Anspruch 7 wobei die abgelegten Dokumente, bevorzugt mitsamt der Relevanzbewertung, einem breiten Leserkreis zugänglich gemacht werden.

9. Verfahren nach Anspruch 8 wobei weiterhin auch organisationsinterne Dokumente, insbesondere prioritätsbegründend hinterlegte Patentanmeldungen, zugänglich gemacht werden.

10. Verfahren nach einem der vorstehenden Ansprüche, wobei die Dokumente in elektronischer Form bereitgestellt und gegebenenfalls in den relevanzbezogenen Archiven abgelegt werden.

11. Verfahren nach Anspruch 10 wobei die Dokumente in verschiedenen Detailstufen abgelegt werden, welche durch symbolische Zeiger miteinander verknüpft und/oder mit gegenseitigen Verweisungen versehen werden.

12. Verfahren nach einem der vorstehenden Ansprüche, wobei dokumentenspezifische Informationen in einem einheitlichen Datenformular auf einem Computersystem abgelegt und angezeigt werden.

13. Verfahren nach Anspruch 12 wobei dokumentenspezifische Einträge unmittelbar in dem Datenformular vorgenommen werden.

14. Verfahren nach Anspruch 13 wobei die Identität des Eintragenden und dessen Berechtigung zur Vornahme von Einträgen in bestimmten Formularfeldern überprüft werden.

15. Verfahren nach einem der Ansprüche 13 der 14 wobei die Einträge in der Koordinationstabelle erfasst werden.

16. Verfahren nach einem der Ansprüche 10 bis 15, **dadurch gekennzeichnet, dass** wenigstens eine Detailstufe eines Dokumentes recherchierbar vorliegt.

17. Verfahren nach einem der vorstehenden Ansprüche, welches in ein elektronisches Postsystem integriert ist

18. Verfahren nach einem der vorstehenden Ansprüche welches auf einem verteilten heterogenen Computersystem implementiert ist.

19. Computerprogramm oder Programmpaket, welches einen Computer zur Durchführung respektive zur Steuerung eines Verfahrens gemäss einem der vorstehenden Ansprüche veranlasst.

20. Datenträger, auf welchem ein Computerprogramm oder Computerprogrammpaket gemäss Anspruch 19 als Quelltext und/oder als ausführbarer Computercode gespeichert ist.
